Europäisches Patentamt

European Patent Office

Office européen des brevets

(19)

(11) **EP 1 156 024 A1**

(12) **EUROPEAN PATENT APPLICATION**

(43) Date of publication:
21.11.2001 Bulletin 2001/47

(51) Int Cl.⁷: **C04B 41/87**, C03C 17/25,
C03C 17/00, C23C 18/12

(21) Application number: 00870111.2

(22) Date of filing: 19.05.2000

(84) Designated Contracting States:
**AT BE CH CY DE DK ES FI FR GB GR IE IT LI LU MC NL PT SE**
Designated Extension States:
**AL LT LV MK RO SI**

(71) Applicant: **"VLAAMSE INSTELLING VOOR TECHNOLOGISCH ONDERZOEK",**
afgekort **"V.I.T.O."**
**2400 Mol (BE)**

(72) Inventors:
• **van de Leest, René**
**2350 Vosselaar (BE)**
• **Luyten, Jan**
**3054 Vaalbeek (BE)**
• **Dekempeneer, Erik**
**2390 Oostmalle (BE)**

(74) Representative: **Van Malderen, Joelle et al**
**Office Van Malderen,**
**Place Reine Fabiola 6/1**
**1083 Bruxelles (BE)**

(54) **Composite ceramic precursors and layers**

(57) The present invention deals with precursor suspensions for the manufacture of composite ceramic layers, comprising ceramic particles with chemically condensable groups on their surface and a gelling compound comprised in the liquid phase of said precursor suspension. The ceramic suspension or paste contains ceramic particles, an acid, a solvent and an alkoxide compound. The precursor suspension is characterised by the viscosity and stability which can be tailored towards the application or deposition method. The addition of pigments yield coloured ceramic suspensions which can be used as a ceramic paint.

The present invention further comprises a method for the deposition of a composite ceramic layer on the surface of a substrate, comprising the following subsequent steps:

• a preparation step wherein the precursor suspension according to the invention is prepared,
• an application step wherein said precursor suspension is applied on said surface to form a suspension layer,
• a gelling step wherein said suspension layer is transformed into a gelled suspension layer, and
• a hardening step wherein said gelled suspension layer is hardened.

```
┌─────────────────────────────────────┐
│   Prepare Precursor Suspension       │
└─────────────────────────────────────┘
                  │
                  ▼
┌─────────────────────────────────────┐
│     Apply to substrate surface       │
└─────────────────────────────────────┘
                  │
                  ▼
┌─────────────────────────────────────┐
│     Transformation to gel            │
└─────────────────────────────────────┘
                  │
                  ▼
┌─────────────────────────────────────┐
│        Hardening step                │
└─────────────────────────────────────┘
```

Fig. 1

EP 1 156 024 A1

## Description

### Field of the invention

The present invention relates to ceramic precursors and ceramic layers to cover substrates such as metals, ceramics and glass for protection, anti-corrosion, decoration, electric or electronic insulation,... .

### State of the art

The covering of a substrate is usually performed using a precursor-suspension of ceramic particles in a wet chemical matrix such as a sol-gel solution. A classical application technique is dipping, followed by a drying step. The drying of a ceramic layer is a slow process. The manufacturing of multilayer systems is therefore very difficult when using the classical techniques. Further inconveniences of the state of the art are the difficult control of the drying process (formation of cracks due to material contraction). Further, the structure obtained with such a process is not well controlled : during drying, wet precursor can move over the substrate surface, resulting in differences in layer thickness and particle sagging leading to a non-uniform layer. Another drawback is the precursor material, which cannot always be tailored to the application e.g. tape casting requires a different viscosity than screen printing or dipping.

### Aims of the invention

A primary aim of the present invention is to provide a method for manufacturing a ceramic layer on a substrate, which is easily controllable, provides a uniform layer and layer thickness and can be used for the deposition of multilayer systems.
A further aim is to provide a new type of precursor for the deposition of ceramic layers on substrates.

### General description of the invention:

The present invention comprises a precursor suspension for the manufacture of a composite ceramic layer, comprising ceramic particles with chemically condensable groups on their surface and a gelling compound comprised in the liquid phase of said precursor suspension.
Said precursor suspension can be further characterised in that the chemical particles are selected from the group consisting of : oxides, nitrides, carbides and borides or a mixture thereof. The gelling compound is preferably an alkoxyde. The precursor can comprise further a solvent such as water or an organic solvent, and/or an acid. The viscosity of the ceramic precursor suspension is determined by the acid concentration, the alkoxide concentration, hydrolysis degree and the solvent. The stability of the ceramic suspension is mainly determined by the stability of the gelling compound (preferably alkoxide) and by the acid concentration. The gelling compound can be stabilised by chemical modification such as, in the case of an alkoxide, the replacement of an alkoxide group with a non-hydrolysable group like acetate, acetylacetonate, alkylacetoacetate, ethanolamine... .
A further embodiment of the present invention is a method for the deposition of a composite ceramic layer on the surface of a substrate, comprising the following subsequent steps:

- a preparation step wherein the precursor suspension according to the present invention is prepared,
- an application step wherein said precursor suspension is applied on said surface to form a suspension layer,
- a gelling step wherein said suspension layer is transformed into a gelled suspension layer, and
- a hardening step wherein said gelled suspension layer is hardened.

Said hardening step is preferably selected from the group consisting of: thermal sintering, microwave heating, UV-irradiation, rapid thermal processing and plasma treatment or a combination thereof. The method can be further characterised in that the viscosity of the ceramic precursor suspension is tailored to the deposition technology and to the required film thickness. All common wet chemical deposition technologies are applicable: dipping, spinning, spraying, screen printing, tape casting, brush painting, ... or any combination thereof. Said gelling step can comprise a change in pH of the suspension layer and/or exposing the suspension layer to an alkaline medium such as ammonia vapour and/or exposing the suspension layer to water.
Addition of colour pigments to the ceramic suspension creates a water-based ceramic paint, which can be applied with a paint brush and can be cured leading to true ceramic paintings or decorations. The fact that the "ceramic paint" can be a water-based suspension makes the use environmentally friendly.
Another embodiment of the present invention is a method for depositing a composite ceramic multiple layer on the surface of a substrate, said method comprising at least two consecutive steps, said steps comprising the subsequent steps of the method for the deposition of a composite ceramic layer on the surface of a substrate according to the present invention.

**Detailed description of the present invention**

Composite ceramic layers comprise ceramic particles enclosed in a ceramic matrix based on the same or other ceramic material. In the present invention, the precursor material comprises a suspension of ceramic particles in a wet chemical solution such as a sol-gel system. In the process according to the present invention, a film of precursor (as applied on the substrate) is very quickly solidified (as a gel) before sintering. The combination of the precursor and the application process leads to a new type of ceramic layer and makes the deposition of multilayer systems possible.

The dispersion of ceramic particles in a solvent can be governed by electrostatic forces created by the accumulation of electrical charged groups in an acid medium. By adding alkoxide compounds the electrical charge bearing groups are replaced by the alkoxide via an oxo-bonding, leading to higher viscosity or coagulation of the ceramic particles. Properties of the suspension like stability and viscosity are related to the chemical composition of the suspension and can be varied creating new products like stable ceramic suspensions or pastes or paint. Ceramic pastes or suspensions are applied in fields such as thin film technology, electronic circuits, seals, thin ceramic substrate for chip packaging, ...

The viscosity of the precursor suspension can be tailored by varying the ratio of the various components of the suspension. Complete coagulation to a solid, green ceramic mass is possible as well as the creation of a stable paste or low-viscous suspension. Example: a 50 volume % alumina suspension in acidified water forms a solid ceramic mass when the acid concentration is 0.3 N and the alkoxide concentration is 0.1 M; when the acid concentration is 0.4 N then no solid mass is formed but a stable low viscous suspension or paste is obtained.

Every wet chemical deposition technology requires an appropriate suspension viscosity. Tape casting requires a viscosity between 1 Pa.s and 100 Pa.s; screen printing requires a viscosity between 100 Pa.s and 200 Pa.s; dipping can be done with 0.1 Pa.s suspensions.

In practice the optimum acid concentration lies between 0.1N and 1N, the optimum alkoxide concentration between 0.01M and 2M, the ceramic particle concentration can also be varied between 1 volume% and 60 volume%. The solvent can be water or an organic solvent like alcohol or a mixture of water and an organic solvent.

Ceramic composites comprise homogeneous and heterogeneous composites. In a homogeneous composite, the wet precursor phase yields a compound (ceramic) of the same nature as the ceramic filler powder. For example, the precursor can be an $Al_2O_3$ suspension in an aluminiumalkoxide solution. The grain size of the ceramic particles originating from the wet phase is different from the grain size of the dispersed ceramic powder. The ceramic powder contains particles usually in the range of 0.1 mm to 1 mm. The particles originating from the precursor solution can be as small as a few nm, depending on the type of precursor and the method of heat treatment. The precursor solution usually yields amorphous films suitable for temperatures lower than 500°C. At higher temperatures, crystallisation as well as sintering might occur, leading to bigger particles.

In a heterogeneous composite, the nature of the particles originating from the wet phase and the nature of the ceramic filler material are different. Material derived from a dispersion of zirconium dioxide powder in a TEOS (tetraethylorthosilicate) precursor solution becomes finally a $ZrO_2.SiO_2$ composite. The grain sizes will be different as well, the sizes depending on the heat treatment.

**Short description of the figure**

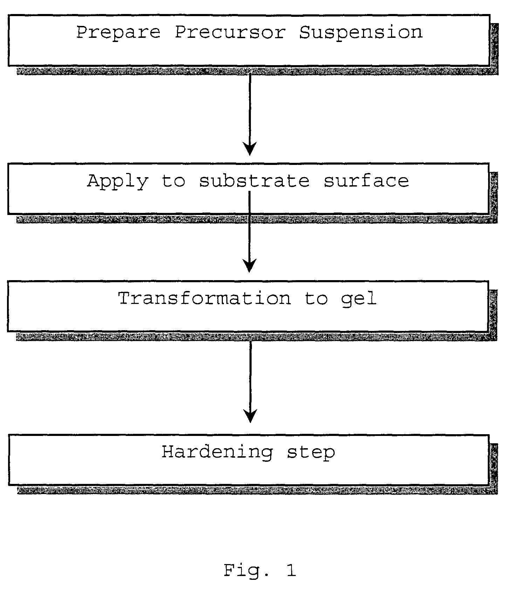

Figure 1 is a flowchart showing the process according to the present invention.

The precursor according to the invention is a suspension (slurry) of ceramic particles dispersed in a solution containing a gelling compound. The ceramic particles are chemically pre-treated to generate active chemically condensable groups such as hydroxyl groups. Two hydroxyl groups can react (condense) to form an oxygen bond and water.

The wet phase comprises a compound with condensable groups such as a hydrolysed alkoxide. Hydroxyl groups react with each other on a pH change, resulting in a three-dimensional gel structure. Partly dissolving the ceramic powder can also result in the formation of condensable groups, e.g. dissolving $SiO_2$ or $Si_3N_4$ generates compounds comprising silanol groups (-Si-OH).

The condensable groups in the solution can react with the condensable groups on the ceramic particles to form a solid composite.

For example, a ceramic powder can be dispersed in an acid solution followed by the addition of a hydrolysed alkoxide. The suspension can then be applied to a surface by any wet chemical deposition technique such as dipping, spinning, spraying, ... Fast gelling of the suspension layer is performed through a fast pH change, e.g. by contacting the layer with ammonia vapour. Other possibilities to produce gelling of the layer are quick heating or the addition of extra water (in the case of an alcohol suspension).

The stable, solid gel layer is transformed into a ceramic layer through classical methods such as sintering, microwave heating, UV-irradiation, rapid thermal processing (RTP) and plasma treatment.

The composite films, resulting from the use of the precursor and the method of the present invention, have lower stress than films derived from homogeneous precursors. The precursor is a highly loaded suspension (50 vol. % or more) which reduces the shrinkage of the film during processing, leading to lower film stress and enabling to deposit thick coatings ( > 1 mm).

The wet chemical component in a suspension will crystallise at lower temperature than when using a pure wet chemical precursor because in a composite precursor the ceramic particles act as a template for the nucleation and growth of the film originating from the wet phase. Functional films can therefore be deposited at lower temperature.

Example 1:

$Si_3N_4$ powder, dispersed in an acid solution forms chemically condensable surface groups such as hydroxyl groups (-OH) and amine-like groups ($NH_X$). When the dispersion ages, a portion will dissolve in acid aqueous condition to form silicium acid comprising hydroxyl groups. Hydrolysed TEOS (tetraethoxyorthosilicate) can be added.

Exposing a suspension layer to ammonia vapour (change in pH) will lead to fast gelling of the layer. The result is a stable gel which can be sintered to produce a ceramic $Si_3N_4/SiO_2$ composite layer. The reaction can be described as follows:

$$Si_3N_4\text{-OH} + \text{HO-Si-OH} + \text{HO-}Si_3N_4 \rightarrow Si_3N_4\text{-O-Si-O-}Si_3N_4 + 2\ H_2O$$

$$Si_3N_4\text{-OH} + \text{HO-Al-OH} + \text{HO-}Si_3N_4 \rightarrow Si_3N_4\text{-O-Al-O-}Si_3N_4 + 2\ H_2O$$

Example 2:

Aluminium oxide powder is dispersed in an acidified alcohol solution. Chemically modified aluminium alkoxide (acetate, acetoacetyl-, ... modified) is added.

Exposure to ammonia vapour or water results in fast gelling of a suspension layer. Sintering yields a ceramic layer. The process can be described by the following reactions :

$$Al_2O_3\text{-OH} + \text{HO-Al-OH} + \text{HO-}Al_2O_3 \rightarrow Al_2O_3\text{-O-Al-O-}Al_2O_3 + 2\ H_2O$$

In stead of aluminium alkoxide, other compounds can be used such as modified Zr alkoxide:

$$Al_2O_3\text{-OH} + \text{HO-Zr-OH} + \text{HO-}Al_2O_3 \rightarrow Al_2O_3\text{-O-Zr-O-}Al_2O_3 + 2\ H_2O$$

Example 3:

Stable alumina precursor suspensions have been prepared with four different alkoxide compounds:

(1) 50 vol.% alumina, 0.4 N nitric acid, 0.05 M - 0.1 M TEOS ( tetraethoxyorthosilicate), water
(2) (2) cfr(1) but aluminium butoxide instead of TEOS
(3) cfr(1) but titaniumisopropoxide instead of TEOS
(4) cfr(1) but zirconiumisopropoxide instead of TEOS

**Claims**

1. Precursor suspension for the manufacture of a composite ceramic layer, comprising ceramic particles with chemically condensable groups on their surface and a gelling compound comprised in the liquid phase of said precursor suspension.

2. Precursor suspension such as in claim 1, **characterised in that** the chemical particles are selected from the group consisting of: oxides, nitrides, carbides and borides or a mixture thereof.

3.  Precursor suspension such as in claim 1 or 2, **characterised in that** the gelling compound is an alkoxyde.

4.  Precursor suspension such as in any of the claims 1 to 3, **characterised in that** the gelling compound is chemically modified to improve the stability of said precursor suspension.

5.  Precursor suspension such as in any of the claims 1 to 4, **characterised in that** the solvent is water or an organic solvent.

6.  Precursor suspension such as in any of the claims 1 to 5, **characterised in that** it further comprises an acid.

7.  Precursor suspension such as in any of the claims 1 to 6, **characterised in that** the viscosity can be changed by changing the composition of the suspension.

8.  Precursor suspension such as in any of the claims 1 to 7, **characterised in that** it further comprises colour pigments.

9.  Method for the deposition of a composite ceramic layer on the surface of a substrate, comprising the following subsequent steps:

    •   a preparation step wherein the precursor suspension of any of the claims 1 to 4 is prepared,
    •   an application step wherein said precursor suspension is applied on said surface to form a suspension layer,
    •   a gelling step wherein said suspension layer is transformed into a gelled suspension layer, and
    •   a hardening step wherein said gelled suspension layer is hardened.

10. The method as in claim 9, **characterised in that** said hardening step is selected from the group consisting of: thermal sintering, microwave heating, UV-irradiation, rapid thermal processing and plasma treatment or a combination thereof.

11. The method as in claim 9 or 10, **characterised in that** said application step is chosen from the group comprising dipping, spinning, spraying, screen printing, tape casting, brush painting or any combination thereof.

12. The method as in any of the claims 9 to 11, **characterised in that** said gelling step comprises a change in pH of the suspension layer.

13. The method as in any of the claims 9 to 12, **characterised in that** said gelling step comprises exposing the suspension layer to an alkaline medium, preferably ammonia vapour.

14. The method as in any of the claims 9 to 13, **characterised in that** said gelling step comprises exposing the suspension layer to water.

15. A method for depositing a composite ceramic multiple layer on the surface of a substrate, comprising at least two consecutive steps said steps comprising the subsequent steps of any of the claims 9 to 14.

16. Use of the precursor suspension such as in claim 8 as a ceramic paint.

```
┌─────────────────────────────────────────┐
│      Prepare Precursor Suspension        │
└─────────────────────────────────────────┘
                    │
                    ▼
┌─────────────────────────────────────────┐
│        Apply to substrate surface        │
└─────────────────────────────────────────┘
                    │
                    ▼
┌─────────────────────────────────────────┐
│         Transformation to gel            │
└─────────────────────────────────────────┘
                    │
                    ▼
┌─────────────────────────────────────────┐
│            Hardening step                │
└─────────────────────────────────────────┘
```

Fig. 1

**European Patent Office**

## EUROPEAN SEARCH REPORT

Application Number

EP 00 87 0111

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 96 29447 A (UNIV KINGSTON) 26 September 1996 (1996-09-26) * claims; examples * | 1-11, 14-16 | C04B41/87 C03C17/25 C03C17/00 C23C18/12 |
| X | PATENT ABSTRACTS OF JAPAN vol. 1998, no. 03, 27 February 1998 (1998-02-27) & JP 09 299879 A (HITACHI LTD;LASER NOSHUKU GIJUTSU KENKYU KUMIAI; HITACHI NUCLEAR ENG C), 25 November 1997 (1997-11-25) * abstract * | 1-3,5, 7-11, 14-16 | |
| X | DE 198 17 482 A (FRAUNHOFER GES FORSCHUNG) 21 October 1999 (1999-10-21) * claims; examples * | 1-4, 7-11, 14-16 | |
| X | WO 97 11040 A (MC DONNELL DOUGLAS CORP ;FITZGIBBONS JERRY M (US); FRENCH JAMES E) 27 March 1997 (1997-03-27) * claims; examples * | 1,2,5, 8-16 | TECHNICAL FIELDS SEARCHED (Int.Cl.7) C04B |
| X | WO 96 00198 A (PENTH BERND) 4 January 1996 (1996-01-04) * claims * | 1-3, 5-11, 14-16 | |
| X | EP 0 263 428 A (PPG INDUSTRIES INC) 13 April 1988 (1988-04-13) * page 4, line 49 - page 9, line 31 * | 1-11, 14-16 | |
| X | DE 196 47 368 A (INST NEUE MAT GEMEIN GMBH) 20 May 1998 (1998-05-20) * claims; examples 9,12,13 * * column 5, line 4 - line 44 * | 1-3, 5-11, 14-16 | |

-/--

The present search report has been drawn up for all claims

| Place of search | Date of completion of the search | Examiner |
|---|---|---|
| THE HAGUE | 12 October 2000 | Rosenberger, J |

EPO FORM 1503 03.82 (P04C01)

**European Patent Office**

## EUROPEAN SEARCH REPORT

Application Number

EP 00 87 0111

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 624 613 A (GARRIGUS DARRYL F ET AL) 29 April 1997 (1997-04-29) * claim 7 * | 1,3,5-16 | |

TECHNICAL FIELDS SEARCHED (Int.Cl.7)

The present search report has been drawn up for all claims

| Place of search | Date of completion of the search | Examiner |
|---|---|---|
| THE HAGUE | 12 October 2000 | Rosenberger, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

8

**ANNEX TO THE EUROPEAN SEARCH REPORT
ON EUROPEAN PATENT APPLICATION NO.**

EP 00 87 0111

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2000

| Patent document cited in search report | | Publication date | Patent family member(s) | | Publication date |
|---|---|---|---|---|---|
| WO 9629447 | A | 26-09-1996 | US | 5585136 A | 17-12-1996 |
| | | | AU | 4617496 A | 08-10-1996 |
| | | | CA | 2213209 A | 26-09-1996 |
| | | | EP | 0815285 A | 07-01-1998 |
| | | | HK | 1007889 A | 30-04-1999 |
| | | | JP | 11502262 T | 23-02-1999 |
| | | | US | RE36573 E | 15-02-2000 |
| JP 09299879 | A | 25-11-1997 | NONE | | |
| DE 19817482 | A | 21-10-1999 | NONE | | |
| WO 9711040 | A | 27-03-1997 | US | 5626923 A | 06-05-1997 |
| | | | AU | 7363096 A | 09-04-1997 |
| WO 9600198 | A | 04-01-1996 | DE | 4421978 A | 04-01-1996 |
| | | | DE | 4437767 A | 25-04-1996 |
| | | | DE | 4439722 A | 15-05-1996 |
| | | | EP | 0766657 A | 09-04-1997 |
| | | | US | 5885657 A | 23-03-1999 |
| EP 0263428 | A | 13-04-1988 | US | 4753827 A | 28-06-1988 |
| | | | US | 4799963 A | 24-01-1989 |
| | | | US | 4754012 A | 28-06-1988 |
| | | | US | 4731264 A | 15-03-1988 |
| | | | US | 4814017 A | 21-03-1989 |
| | | | AU | 596702 B | 10-05-1990 |
| | | | AU | 7932087 A | 21-04-1988 |
| | | | BR | 8705242 A | 24-05-1988 |
| | | | CN | 87107834 A | 27-07-1988 |
| | | | DE | 3786864 A | 09-09-1993 |
| | | | DE | 3786864 T | 24-02-1994 |
| | | | ES | 2059338 T | 16-11-1994 |
| | | | JP | 6055925 B | 27-07-1994 |
| | | | JP | 63123838 A | 27-05-1988 |
| | | | KR | 9204191 B | 30-05-1992 |
| | | | YU | 182387 A | 28-02-1989 |
| | | | CN | 1079972 A | 29-12-1993 |
| | | | DE | 3751856 D | 14-08-1996 |
| | | | DE | 3751856 T | 13-02-1997 |
| | | | EP | 0486469 A | 20-05-1992 |
| | | | ES | 2091955 T | 16-11-1996 |
| | | | US | 5231156 A | 27-07-1993 |
| DE 19647368 | A | 20-05-1998 | AU | 5482598 A | 10-06-1998 |
| | | | AU | 5552498 A | 10-06-1998 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**                    EP 00 87 0111

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2000

| Patent document cited in search report | | Publication date | Patent family member(s) | | Publication date |
|---|---|---|---|---|---|
| DE 19647368 | A | | AU | 5552598 A | 10-06-1998 |
| | | | BR | 9712956 A | 07-12-1999 |
| | | | BR | 9713084 A | 28-03-2000 |
| | | | CN | 1236339 A | 24-11-1999 |
| | | | WO | 9822648 A | 28-05-1998 |
| | | | WO | 9822536 A | 28-05-1998 |
| | | | WO | 9822241 A | 28-05-1998 |
| | | | EP | 0938405 A | 01-09-1999 |
| | | | EP | 0950039 A | 20-10-1999 |
| | | | EP | 0946313 A | 06-10-1999 |
| | | | PL | 333455 A | 20-12-1999 |
| US 5624613 | A | 29-04-1997 | US | 5863846 A | 26-01-1999 |
| | | | US | 5849650 A | 15-12-1998 |
| | | | US | 5753573 A | 19-05-1998 |